## Europäisches Patentamt
## European Patent Office
## Office européen des brevets

(11) Publication number: **0 096 911**
**B1**

## EUROPEAN PATENT SPECIFICATION

(45) Date of publication of patent specification: **25.03.87**

(21) Application number: **83200717.3**

(22) Date of filing: **20.05.83**

(51) Int. Cl.⁴: **F 16 H 3/08, F 16 H 57/02**

(54) Stepped ratio-change gearbox.

(30) Priority: **01.06.82 GB 8215908**

(43) Date of publication of application:
**28.12.83 Bulletin 83/52**

(45) Publication of the grant of the patent:
**25.03.87 Bulletin 87/13**

(84) Designated Contracting States:
**DE FR GB IT**

(56) References cited:
**DE-A-2 916 738**
**FR-A-2 079 428**
**FR-A-2 263 427**
**GB-A-2 032 541**
**US-A-2 181 460**
**US-A-4 000 662**

**ZAHNRADGETRIEBE, K. Kollmann & J. Looman**
**(Heidelberg 1970)**

(73) Proprietor: **J.I. Case Europe Limited**
**Cardrew Industrial Estate**
**Redruth Cornwall TR15 1ST (GB)**

(72) Inventor: **Hodgson, Eric Charles**
**74 Hill Top Road Salendine Nook**
**Huddersfield West Yorkshire (GB)**
Inventor: **Weyman, Roger Michael**
**Alverley Lodge Farm Alverley**
**Doncaster South Yorkshire (GB)**

(74) Representative: **Norcliffe, Kenneth Adrian**
**Patents Department David Brown Tractors**
**Limited Meltham**
**Huddersfield, HD7 3AR West Yorkshire (GB)**

Courier Press, Leamington Spa, England.

## Description

This invention relates to a stepped ratio-change gearbox, particularly but not exclusively for use in vehicles in which event it may operate in series with one or more additional gearboxes one of which includes reverse gearing.

DE—A—2 916 738 discloses a stepped ratio-change gearbox including a casing, co-axial input and output shafts one end of the former being journalled upon the adjacent end of the latter, a layshaft parallel to said shafts, a gear freely rotatable on that end of the input shaft adjacent the output shaft and meshing constantly with a gear fixed to the layshaft, a gear freely rotatable on the input shaft and meashing constantly with a gear fixed to the layshaft, a gear freely rotatable on the output shaft and meshing constantly with a gear fixed to the layshaft, a synchromesh clutch associated with the input shaft and capable of selectively driveably connecting to said shaft either of the gears thereon, and a synchromesh clutch associated with the output shaft and capable of selectively driveably connecting to said shaft either the gear thereon or the gear on the input shaft. The gear on that end of the input shaft adjacent the output shaft is not directly journalled in the casing and thus is not supported with a high degree of accuracy.

In the book "Zahnradgetriebe" by K. Kollmann and J. Looman, published 1970 in Heidelberg (DE) by Springer-Verlag, there is disclosed on page 182 an eight-speed gearbox including a casing; co-axial input and output shafts one end of the former being journalled within the adjacent end of the latter; a gear freely rotatable on that end of the output shaft adjacent the input shaft, journalled in a web of the casing, and meshing constantly with a gear fixed to the layshaft; a gear freely rotatable on the input shaft and meshing constantly with a gear fixed to the layshaft; a gear freely rotatable on the output shaft and meshing constantly with a gear fixed to the layshaft; a synchromesh clutch associated with the input shaft and capable of selectively driveably connecting to said shaft either the gear thereon or the gear on the output shaft; and a synchromesh clutch associated with the output shaft and capable of selectively driveably connecting to said shaft either of the gears thereon. The gear on that end of the output shaft adjacent the input shaft, being disposed on one side of the web, is not supported in a balanced manner.

The object of the present invention is to provide a gearbox of basically similar type to those referred to in the preceding two paragraphs, in which the gear selectively driveably connectible to the co-axial input and output shafts is supported more effectively and means are provided to overcome consequential assembly problems.

According to the invention, a stepped ratio-change gearbox comprising a casing; co-axial input and output shafts; a layshaft parallel to said shafts; a gear co-axial with the input and output shafts, freely rotatable relative to each of said shafts, journalled in the casing, and meshing constantly with a gear fixed to the layshaft; a gear freely rotatable on the input shaft and meshing constantly with a gear fixed to the layshaft; a gear freely rotatable on the output shaft and meshing constantly with a gear fixed to the layshaft; a clutch device associated with the input shaft and capable of selectively driveably connecting to said shaft with the gear thereon or gear co-axial with the input and output shafts; a clutch device associated with the output shaft and capable of selectively driveably connecting to said shaft either the gear thereon or the gear co-axial with the input and output shafts; is characterised in that the gear co-axial with the input and output shafts is journalled between two parallel webs of the casing, the adjacent ends of said shafts are each journalled in said gear, and elements of the clutch devices are permanently connected by means of gear-type couplings to the respective ends of said gear.

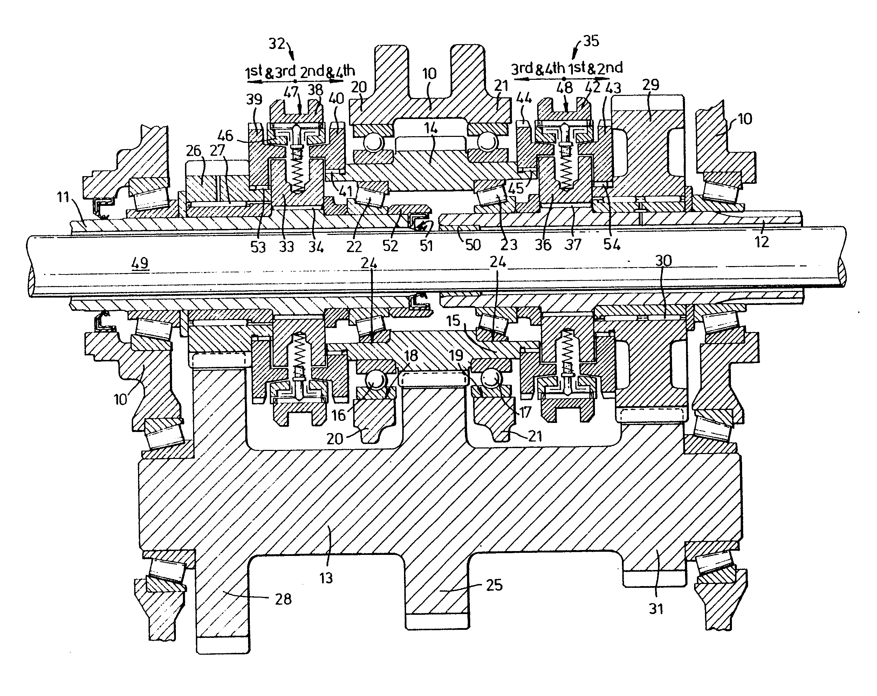

A preferred embodiment of the invention will now be described, by way of example only, with reference to the accompanying drawing which is an axial section through a stepped ratio-change gearbox.

Referring now to the drawing, a gearbox providing four different speed ratios is adapted to be operatively connectd in series with a gearbox (not shown) providing three forward speed ranges and one reverse speed range in an agricultural tractor. If required, there can be operatively connected between the two gearboxes an epicyclic gear unit (not shown) capable of selectively transmitting a direct drive or a low speed ratio drive. The four-ratio gearbox is operable hydraulically while the tractor is on the move, and the epicyclic gear unit (if fitted) and the range gearbox are operable manually while the tractor is stationary.

The four-ratio gearbox comprises a casing 10, only portions of which are shown, in which there are journalled a tubular input shaft 11, a tubular output shaft 12 co-axial with the shaft 11, and a layshaft 13 parallel to the shafts 11 and 12. Also journalled in the casing 10 is a helically toothed gear 14 formed integrally at the mid-point of a short sleeve 15 of relatively large diameter which co-axially surrounds the adjacent ends of the shafts 11 and 12. The sleeve 15 is supported in two bearings 16 and 17 located in aligned bores 18 and 19 in respective parallel webs 20 and 21 formed integrally with the casing 10 near the mid-point of its length, and the adjacent ends of the shafts 11 and 12 are supported in respective bearings 22 and 23 located in the bore 24 of the sleeve 15. The gear 14 is thus disposed between the webs 20 and 21, and meshes constantly with a gear 25 of almost the same pitch circle diameter which is formed integrally on the layshaft 13 near the mid-point of its length. A helically-toothed pinion 26 is rotatably mounted on a needle bearing 27 on the input shaft 11 and meshes constantly with a wheel 28 formed integrally on the layshaft 13, and a helically-toothed wheel 29 is rotatably mounted on a needle bearing 30 on the output shaft 12 and meshes constantly with a pinion 31 formed integrally on the layshaft 13. The ratio of the pitch circle diameter of the pinion 26 to that of the wheel 28 with which it meshes is substantially different from the ratio of the pitch circle diameter of the pinion 31 to that of the wheel 29 with which it meshes, and said ratios are so chosen, in conjunction with the ratio of the pitch circle diameters of the gears 14 and 25, that the four overall speed ratios provided by the gearbox are arranged substantially in a geometric progression. One synchromesh clutch indicated generally at 32 includes a hub 33 which is driveably connected by splines 34 to the input shaft 11 between the pinion 26 and the gear 14, and another synchromesh clutch indicated generally at 35 includes a hub 36 which is driveably connected by splines 37 to the output shaft 12 between the wheel 29 and the gear 14. The sychromesh clutch 32 includes an axially slideable internally toothed sleeve 38 shown in neutral position and engageable selectively with a toothed clutch element 39 driveably connected to the adjacent end of the pinion 26 by means of a gear-type coupling 53 and with a toothed clutch element 40 driveably connected to the adjacent end of the sleeve 15 by means of a gear-type coupling 41. Similarly, the synchromesh clutch 35 includes an axially slideable internally toothed sleeve 42 shown in neutral position and engageable selectively with a toothed clutch element 43 driveably connected to the adjacent end of the wheel 29 by means of a gear-type coupling 54 and with a toothed clutch element 44 driveably connected to the adjacent end of the sleeve 15 by means of a gear-type coupling 45. The couplings 41 and 45 are necessary to permit assembly, whereas the couplings 53 and 54 help to achieve minimal length of the gearbox. Each of the synchromesh clutches 32 and 35 also includes conventional cone-clutch means 46 for effecting ·speed synchronisation between the hub 33 or 36 and the appropriate toothed clutch element 39, 40, 43, or 44 prior to their interconnection by the internally toothed sleeve 38 or 42. Respective hydraulically operable selector forks (not shown) engage in annular grooves 47 and 48 in the peripheries of the internally toothed sleeves 38 and 42. A power take-off shaft 49 passing co-axially through the tubular input and output shafts 11 and 12 is journalled in a plain bearing 50 in the output shaft 12 and engaged by an oil seal 51 mounted in a collar 52 on the input shaft 11.

In operation, first (low) speed ratio is obtained by clutching the pinion 26 to the input shaft 11 and the wheel 29 to the output shaft 12, the gear 14 thus rotating idly; second speed ratio is obtained by shifting the internally toothed sleeve 38 of the synchromesh clutch 32 so as to release the pinion 26 from the input shaft 11 and driveably connect to said shaft the gear 14; third speed ratio is obtained by shifting the internally toothed sleeves 38 and 42 of both synchromesh clutches 32 and 35 so that the pinion 26 is driveably connected to the input shaft 11 and the gear 14 is driveably connected to the output shaft 12; and fourth (high) speed ratio is obtained by shifting the internally toothed sleeve 38 of the synchromesh clutch 32 so as to relese the pinion 26 from the input shaft 11 and driveably connect to said shaft the gear 14, thereby utilising said gear to directly connect the input and output shafts 11 and 12 whilst the layshaft 13 rotates idly.

It will be understood that one or more of the gears 25, 28 and 31 on the layshaft 13 can be rigidly secured thereto instead of being formed integrally thereon, and the expression "fixed to" is used herein to cover either arrangement.

The selector forks can equally well be manually operable, the power take-off shaft 49 can be omitted and the input and output shafts 11 and 12 made solid, and the clutches need not be of synchromesh type.

**Claims**

1. A stepped ratio-change gearbox comprising a casing (10); co-axial input and output shafts (11 and 12); a layshaft (13) parallel to said shafts; a gear (14) co-axial with the input and output shafts (11 and 12), freely rotatable relative to each of said shafts, journalled in the casing (10), and meshing constantly with a gear (25) fixed to the layshaft (13); a gear (26) freely rotatable on the input shaft (11) and meshing constantly with a gear (28) fixed to the layshaft (13); a gear (29) freely rotatable on the output shaft (12) and meshing constantly with a gear (31) fixed to the layshaft (13); a clutch device (32) associated with the input shaft (11) and capable of selectively driveably connecting to the input shaft (11) either the gear (26) thereon or the gear (14) co-axial with the input and output shafts (11 and 12); a clutch device (35) associated with the output shaft (12) and capable of selectively driveably connecting to the output shaft (12) either the gear (29) thereon or the gear (14) co-axial with the input and output shafts (11 and 12); characterised in that the gear (14) co-axial with the input and output shafts (11 and 12) is journalled between two parallel webs (20 and 21) of the casing (10), the adjacent ends of the input and output shafts are each journalled in said gear (14), and elements (40 and 44) of the clutch devices are permanently connected by means of gear-type couplings (41 and 45) to the respective ends of said gear (14).

2. A stepped ratio-change gearbox according to claim 1, wherein the clutch devices are synchromesh clutches (32 and 35).

3. A stepped ratio-change gearbox according to claim 1 or claim 2, wherein elements (39 and 43) of the clutch devices are respectively permanently connected by means of gear-type couplings (53 and 54) to the gear (26) freely rotatable on the input shaft (11) and to the gear (29) freely rotatable on the output shaft (12).

4. A stepped ratio-change gearbox according to any one of the preceding claims, wherein the input and output shafts (11 and 12) and the gear

(14) co-axial therewith are tubular, and a power take-off shaft (49) passes co-axially through all of them.

## Patentansprüche

1. Stufengangschaltgetriebe mit einem Gehäuse (10), einer Eingangs- und dazu koaxialen Ausgangswelle (11 und 12), einer zu diesen Wellen parallelen Vorgelegewelle (13), einem Zahnrad (14), das koaxial zu der Eingangs- und der Ausgangswelle (11 und 12), frei drehbar bezüglich jeder dieser Wellen, in dem Gehäuse (10) drehbar gelagert und mit einem an der Vorgelegewelle (13) befestigten Zahnrad (25) dauernd in Eingriff ist, einem Zahnrad (26), das auf der Eingangswelle (11) frei drehbar und mit einem an der Vorgelegewelle (13) befestigten Zahnrad (28) dauernd in Eingriff ist, einem Zahnrad (29), das auf der Ausgangswelle (12) frei drehbar und mit einem an der Vorgelegewelle (13) befestigten Zahnrad (31) dauernd in Eingriff ist, einer Kupplungsvorrichtung (32), die mit der Eingangswelle (11) verbunden ist und mit der Eingangswelle (11) entweder das darauf angeordnete Zahnrad (26) oder das zu der Eingangs- und Ausgangswelle (11 und 12) koaxiale Zahnrad (14) selektiv antriebsmäßig verbinden kann, einer Kupplungsvorrichtung (35), die mit der Ausgangswelle (12) verbunden ist und mit der Ausgangswelle (12) entweder das darauf angeordnete Zahnrad (29) oder das zu der Eingangs- und Ausgangswelle (11 und 12) koaxiale Zahnrad (14) selektiv antriebsmäßig verbinden kann, dadurch gekennzeichnet, daß das zu der Eingangs- und Ausgangswelle (11 und 12) koaxiale Zahnrad (14) zwischen zwei parallelen Stegen (20 und 21) des Gehäuses (10) drehbar gelagert ist, die angrenzenden Enden der Eingangs- und Ausgangswelle (11 und 12) in dem Zahnrad (14) jeweils drehbar gelagert sind und Elemente (40 und 44) der Kupplungsvorrichtungen mittels zahnradartiger Kupplungen (51 und 45) mit den jeweiligen Enden dieses Zahnrades (14) dauernd verbunden sind.

2. Stufengangschaltgetriebe nach Anspruch 1, wobei die Kupplungsvorrichtungen Synchrongetriebekupplungen (32 und 35) sind.

3. Stufengangschaltgetriebe nach Anspruch 1 oder Anspruch 2, wobei Elemente (39 und 43) der Kupplungsvorrichtungen jeweils mittels zahnradartiger Kupplungen (53 und 54) mit dem auf der Eingangswelle (11) frei drehbaren Zahnrad (26) und dem auf der Ausgangswelle (12) frei drehbaren Zahnrad·(29) dauernd verbunden sind.

4. Stufengangschaltgetriebe nach irgendeinem der vorhergehenden Ansprüche, wobei die Eingangs- und Ausgangswelle (11 und 12) und das zu ihnen koaxiale Zahnrad (14) rohrförmig sind und eine Kraftabtriebswelle (49) koaxial durch sie alle hindurchgeht.

## Revendications

1. Boîte de vitesses destinée à changer des rapports de vitesses de manière discontinue, comprenant un carter (10), des arbres coaxiaux d'entrée et de sortie (11 et 12), un arbre intermédiaire (13) parallèle auxdits arbres, un pignon (14) coaxial aux arbres d'entrée et de sortie (11 et 12), pouvant tourner librement par rapport à chacun des arbres, tourillonnant dans le carter (10) et constamment en prise avec un pignon (25) fixé à l'arbre intermédiaire (13), un pignon (26) pouvant tourner librement sur l'arbre d'entrée (11) et constamment en prise avec un pignon (28) fixé à l'arbre intermédiaire (13), un pignon (29) pouvant tourner librement sur l'arbre de sortie (12) et constamment en prise avec un pignon (31) fixé sur l'arbre intermédiaire (13), un dispositif à embrayage (32) associé à l'arbre d'entrée (11) et capable d'assurer sélectivement le raccordement de l'arbre d'entrée (11) soit avec le pignon (26) qu'il porte, soit avec le pignon (14) coaxial aux arbres d'entrée et de sortie (11 et 12), un dispositif (35) à embrayage associé à l'arbre de sortie (12) et capable d'assurer sélectivement le raccordement à l'arbre de sortie (12) soit du pignon (29) qu'il porte, soit du pignon (14) qui est coaxial aux arbres d'entrée et de sortie (11 et 12), caractérisé en ce que le pignon (14) qui est coaxial aux arbres d'entrée et de sortie (11 et 12) tourillone entre deux joues parallèles (20 et 21) du carter (10), les extrémités adjacentes des arbres d'entrée et de sortie (11 et 12) tourillonnent chacune dans le pignon (14), et des éléments (40 et 44) des dispositifs à embrayage sont raccordés en permanence, par des accouplements (41 et 45) du type d'engrenage aux extrémités respectives dudit pignon (14).

2. Boît de vitesses à changement de rapport de vitesse de type discontinu selon la revendication 1, dans laquelle les dispositifs à embrayage sont des synchroniseurs (32 et 35).

3. Boîte des vitesses à changement de rapport de vitesse de façon discontinue selon l'une des revendications 1 et 2, dans laquelle les éléments (39 et 43) des dispositifs à embrayage sont raccordés de manière permanente, par des accouplements (53 et 54) du type d'engrenage, respectivement au pignon (26) qui peut tourner librement sur l'arbre d'entrée (11) et au pignon (29) qui peut tourner librement sur l'arbre de sortie (12).

4. Boîte des vitesses à changement de rapport de vitesse de façon discontinue selon l'une quelconque des revendications précédentes, dans laquelle les arbres d'entrée et de sortie (11 et 12) et le pignon (14) qui leur est coaxial sont tubulaires, et un arbre (49) de prise de force passe coaxialement dans ces arbres.

32    35

1st & 3rd 2nd & 4th    10    3rd & 4th 1st & 2nd

39 47 38 40 20    21 44 48 42 43 29

46    14    45    10

26 27    41    10

11    45

12

53 33 34 22 52 51 50 23 36 37 54    12

49    24    24    30

15

18 19

10    16 17

20    21

13    25    31

28

0 096 911